# EUROPEAN PATENT SPECIFICATION

(11) **EP 3 358 911 B1**
(45) Date of publication and mention of the grant of the patent: **18.12.2019**
(21) Application number: 18153417.3
(22) Date of filing: 25.01.2018
(51) Int. Cl.: H05B 33/08, H05B 37/02

(54) **LIGHT EMITTING DIODE SYSTEM WITH LIGHT SIGNALS CARRIED VIA POWER LINES**
LEUCHTDIODENSYSTEM MIT MITTELS STROMLEITUNGEN GETRAGENEN LICHTSIGNALEN
SYSTÈME DE DIODES ÉLECTROLUMINESCENTES AVEC SIGNAUX LUMINEUX TRANSPORTÉS PAR DES LIGNES D'ALIMENTATION

(30) Priority: 07.02.2017 TW 106103884; 10.03.2017 US 201715455564; 20.12.2017 US 201715848748
(43) Date of publication of application: 08.08.2018
(73) Proprietor: Semisilicon Technology Corp., 235 New Taipei City (TW)
(72) Inventor: PENG, Wen-Chi, 235 New Taipei City (TW)
(74) Representative: 2K Patentanwälte Blasberg Kewitz & Reichel

(56) References cited:
- US-A1- 2014 055 250
- US-B1- 9 380 662
- US-B2- 7 465 056
- US-B2- 9 510 409

## Description

### BACKGROUND OF THE INVENTION

### Field of the Invention

The present invention relates to a light emitting diode system, and especially relates to a light emitting diode system with light signals carried via power lines.

### Description of the Related Art

US9380662 B1 discloses a light emitting diode driving system which is applied to a light emitting diode lamp string, such that the light signal is carried through a power line to reduce the signal transmission lines. The light emitting diode driving system includes a switch unit, a control unit and a light signal generating unit. The switch unit includes a power input side, a power output side and a controlled side. The power output side is electrically connected to the light emitting diode lamp string. The control unit is electrically connected to the switch unit. The light signal generating unit is electrically connected to the control unit and the power output side. The light signal generating unit generates a light signal when the control unit turns off the switch unit. The light signal generating unit sends the light signal to the light emitting diode lamp string. US7465056B2 provides a light emitting diode lamp, which includes at least a light emitting diode and a control circuit. The light emitting diode lamp has an anode pin, a cathode pin, and a synchronous pin. The anode pin and the cathode pin receive a DC voltage, and the synchronous pin is connected to the control circuit. Moreover, the present invention provides a synchronous light emitting diode lamp string, which includes a plurality of light emitting diode lamps and at least a power adapter. Each light emitting diode lamp has a synchronous pin, and all synchronous pins are connected together. The control circuit can control the color changing of the light emitting diode based on a reference signal from the synchronous pin.

US 2014/055250 A1 provides methods and systems that are control devices using signals transmitted over power lines in many different applications and configurations. They provide a lower cost approach for controlling devices via signals transmitted over power lines. The methods and systems may control intensity, spectral, and other characteristics of lighting devices, such as light-emitting diodes (LEDs) or assemblies thereof, via power lines. They may also control other types of loads, such as motors, relays, valves or the like. Additionally, techniques for independently controlling intensity and spectral content of selected high efficiency lighting devices are also described. For example, the brightness and color of an LED may be controlled via the power lines that supply power to the LED.

US 9,510,409 B2 1 discloses a light emitting diode driving system which is applied to a light emitting diode lamp string, such that the light signal is carried through a power line to reduce the signal transmission lines. The light emitting diode driving system includes a switch unit, a control unit and a light signal generating unit. The switch unit includes a power input side, a power output side and a controlled side. The power output side is electrically connected to the light emitting diode lamp string. The control unit is electrically connected to the switch unit. The light signal generating unit is electrically connected to the control unit and the power output side. The light signal generating unit generates a light signal when the control unit turns off the switch unit. The light signal generating unit sends the light signal to the light emitting diode lamp string.

For the existing light emitting diode lamp string generating the light signals, the additional light signal generation circuit has to be arranged to generate the light signals carried via power lines. Arranging the additional light signal generation circuit will result in the additional cost problem. Therefore, how to effectively reduce the cost of the additional light signal generation circuit is the goal of the current technology.

### SUMMARY OF THE INVENTION

In order to solve the above-mentioned problems, an object of the present invention is to provide a light emitting diode system with light signals carried via power lines. The invention is defined by the appended claims.

In order to achieve the object of the present invention mentioned above, the light emitting diode system of the present invention includes a light emitting diode lamp string, a signal voltage unit and a control unit. The light emitting diode lamp string comprises a plurality of light emitting diode units and receives power supplied through the power lines to light. The signal voltage unit is electrically connected to the light emitting diode lamp string. The control unit is electrically connected to the signal voltage unit. The control unit is configured to drive the signal voltage unit to adjust a voltage of the light emitting diode lamp string continuously and repeatedly so the voltage of the light emitting diode lamp string is a predetermined voltage, to form the light signal comprising a plurality of pulse waves to send the light signal to the light emitting diode lamp string. When each of the light emitting diode units receives the light signal, each of the light emitting diode units is configured to perform a conversion and a decoding for the light signal to obtain a lighting mode of the light signal, and then each of the light emitting diode units is configured to light based on the lighting mode.

The advantage of the present invention is to generate the light signals easily to drive the light emitting diodes to perform changing lighting. Therefore, the cost of the light signal generation circuit is saved.

Please refer to the detailed descriptions and figures of the present invention mentioned below for further understanding the technology, method and effect disclosed by the present invention to achieve the predetermined purpose of the present invention. The purpose, features and characteristics of the present invention can be understood well and in details. However, the figures are only for references and descriptions, but the present invention is not limited by the figures, but by the appended claims.

### BRIEF DESCRIPTION OF DRAWING

Fig. 1 shows a block diagram of the first embodiment of the light emitting diode system of the present invention.
Fig. 2 shows a block diagram of the second embodiment of the light emitting diode system of the present invention.
Fig. 3 shows a block diagram of the third embodiment of the light emitting diode system of the present invention.
Fig. 4 shows a block diagram of the fourth embodiment of the light emitting diode system of the present invention.
Fig. 5 shows a block diagram of the fifth embodiment of the light emitting diode system of the present invention.
Fig. 6 shows a waveform diagram of an embodiment of the light signal of the present invention,
Fig. 7 shows a block diagram of the sixth embodiment of the light emitting diode system of the present invention.
Fig. 8 shows a block diagram of the seventh embodiment of the light emitting diode system of the present invention.
Fig. 9 shows a block diagram of the eighth embodiment of the light emitting diode system of the present invention.

### DETAILED DESCRIPTION OF THE INVENTION

Please refer to following detailed description and figures for the technical content of the present invention.

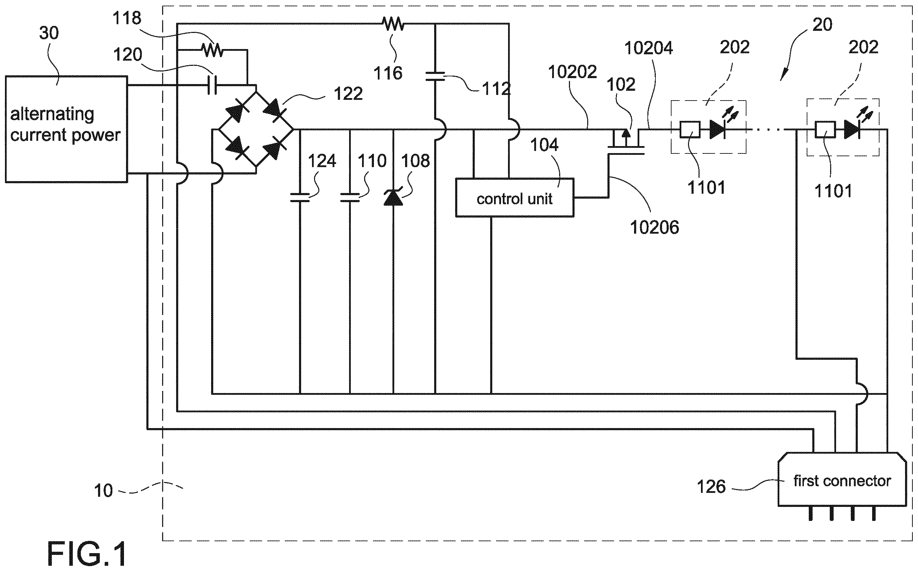

Fig. 1 shows a block diagram of the first embodiment of the light emitting diode system of the present invention. A light emitting diode system 10 having light signals carried via power lines of the present invention is applied to an alternating current power 30. The light emitting diode system 10 comprises a light emitting diode lamp string 20, a signal voltage unit 102, a control unit 104, a first resistor 116, a first capacitor 110, a Zener diode 108, a second capacitor 112, a third capacitor 124, an input side resistor 118, an input side capacitor 120, an alternating-current-to-direct-current converter 122 and a first connector 126. The light emitting diode lamp string 20 comprises a plurality of light emitting diode units 202 and receives power supplied through the power lines to light. The signal voltage unit 102 comprises a power input side 10202, a power output side 10204 and a controlled side 10206. The elements mentioned above are electrically connected to each other. In an embodiment, the present invention only requires the signal voltage unit 102 and the control unit 104 to achieve the efficiency of the present invention.

The control unit 104 is configured to drive the signal voltage unit 102 to adjust a voltage of the light emitting diode lamp string 20 continuously and repeatedly so the voltage of the light emitting diode lamp string 20 is a predetermined voltage, to form the light signal comprising a plurality of pulse waves to send the light signal to the light emitting diode lamp string 20. When each of the light emitting diode units 202 receives the light signal, each of the light emitting diode units 202 is configured to perform a conversion and a decoding for the light signal to obtain a lighting mode of the light signal, and then each of the light emitting diode units 202 is configured to light based on the lighting mode.

In an embodiment of the present invention, the control unit 104 controls a conduction rate of the signal voltage unit 102 to change a voltage of the power output side 10204 to generate the light signal, and then the light emitting diode lamp string 20 receives the light signal to perform changing lighting. The light signal is used to control a lighting pattern of the light emitting diode lamp string 20. The light signal can comprise a plurality of pulse waves to drive the light emitting diode lamp string 20 to achieve various lighting patterns (for examples, changing colors, fast blinking, slowly blinking, marquee effect and so on). The light emitting diode units 202 are two-pin point-controlled lamps. The signal voltage unit 102 shown in Fig. 1 is a P type metal oxide semiconductor field effect transistor (P-MOSFET). However, the present invention does not limit the signal voltage unit 102. The control unit 104 is electrically connected to the controlled side 10206 and provides a control voltage to the controlled side 10206 to determine the conduction rate.

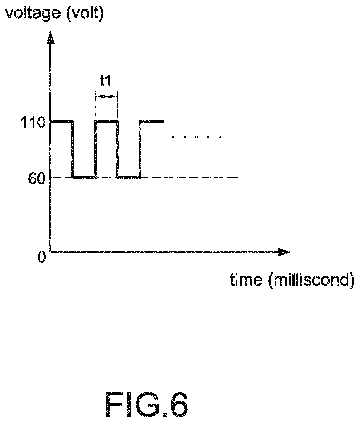

In the embodiment shown in Fig. 1, the electrical characteristics of the P type metal oxide semiconductor field effect transistor are utilized, and the control unit 104 sends a proper voltage to the gate of the P type metal oxide semiconductor field effect transistor to change the conduction rate of the P type metal oxide semiconductor field effect transistor to generate the light signal. Because the metal oxide semiconductor field effect transistor has the variable resistance characteristic which is regarded as having the linear resistance changing according to the changing of the conduction rate, the signal voltage unit 102 can have different resistance values by utilizing different conduction rates. Namely, the voltage of the power output side 10204 is changed to generate the light signal. The light signal comprises a plurality of the pulse waves. The signal voltage unit 102 changes the conduction rate of the signal voltage unit 102 to form the pulse wave each time. The embodiment of the light signal would be described in details in Fig. 6 later. The alternating current power 30 mentioned above sends an alternating current power to the elements mentioned above to perform the rectification, filtering, voltage clamping and so on.

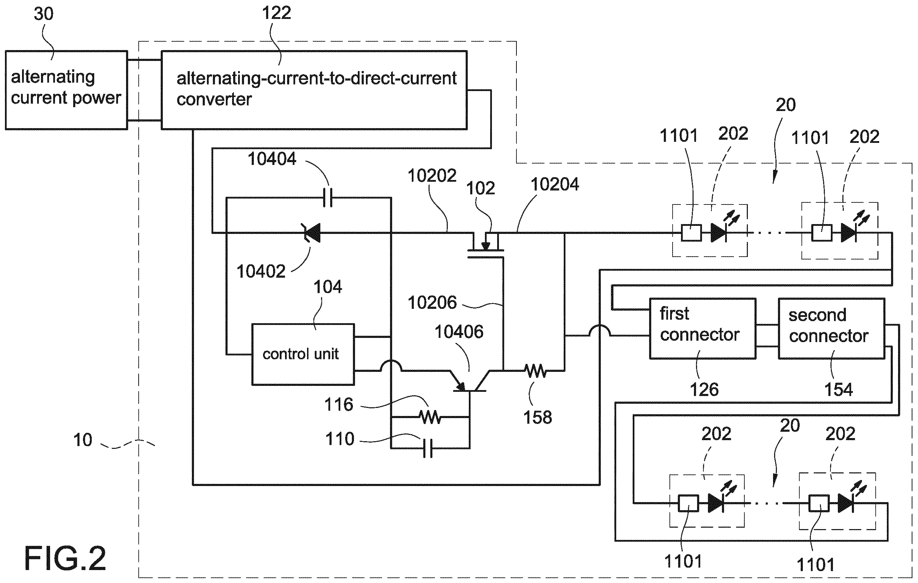

Fig. 2 shows a block diagram of the second embodiment of the light emitting diode system of the present invention. The descriptions of the elements shown in Fig. 2 which are the same as the elements shown in Fig. 1 are not repeated here for brevity. Moreover, the light emitting diode system 10 further comprises a controlling side Zener diode 10402, a controlling side capacitor 10404, a first transistor 10406, an output side resistor 158 and a second connector 154. The elements mentioned above are electrically connected to each other. The signal voltage unit 102 shown in Fig. 2 is an N type metal oxide semiconductor field effect transistor (N-MOSFET) and its efficiency is the same as the efficiency of the P type metal oxide semiconductor field effect transistor shown in Fig. 1, so the description is not repeated here for brevity.

The controlling side Zener diode 10402 is used to supply power to the control unit 104. The related art control unit utilizes the voltage drop of the related art resistor as the driving voltage. However, because the input voltage is high, the temperature of the related art resistor is very high and dangerous. The controlling side Zener diode 10402 of the present invention replaces the related art resistor to supply power to the control unit 104 to avoid the high temperature of the related art resistor. The present invention utilizes the cathode reverse connection characters of the controlling side Zener diode 10402 and utilizes the reverse breakdown voltage, so that the driving voltage of the control unit 104 is supplied by reducing the original input high voltage. Namely, the present invention utilizes the stable voltage and current characters of the controlling side Zener diode 10402 to solve the high temperature problem of the related art.

The alternating-current-to-direct-current converter 122, the controlling side Zener diode 10402, the signal voltage unit 102 and the light emitting diode lamp string 20 are connected in series. The control unit 104, the controlling side Zener diode 10402 and the controlling side capacitor 10404 are connected in parallel. The method for fetching power for the control unit 104 of the present invention is that the controlling side Zener diode 10402 is connected to the light emitting diode lamp string 20 in series. The voltage is divided by the controlling side Zener diode 10402 and the light emitting diode lamp string 20, so that there is no temperature problem. The second connector 154 is connected to the first connector 126, so that the light emitting diode system 10 can comprise more light emitting diode lamp strings 20.

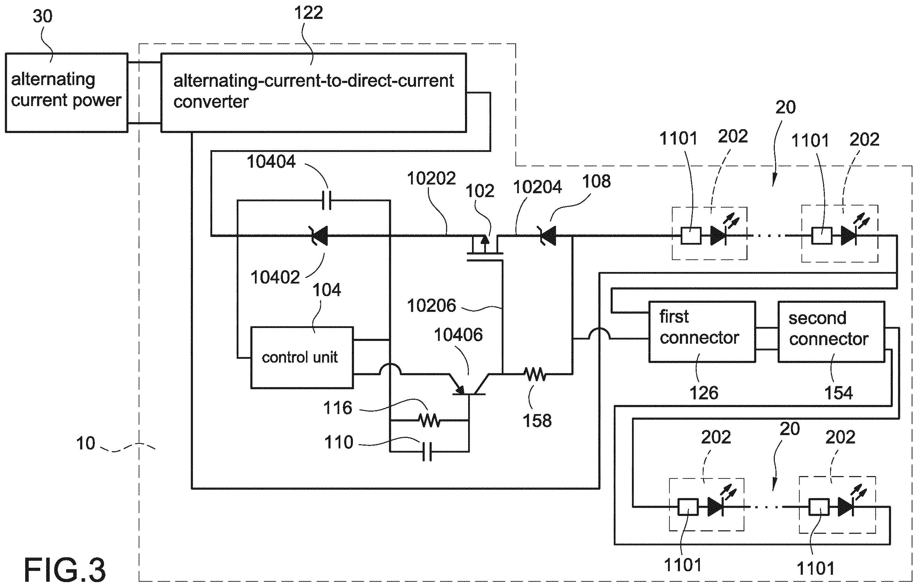

Fig. 3 shows a block diagram of the third embodiment of the light emitting diode system of the present invention. The descriptions of the elements shown in Fig. 3 which are the same as the elements shown in Figs. 1∼2 are not repeated here for brevity. Moreover, the light emitting diode system 10 further comprises a controlling side Zener diode 10402, a controlling side capacitor 10404, a first transistor 10406, an output side resistor 158 and a second connector 154. The elements mentioned above are electrically connected to each other. The signal voltage unit 102 shown in Fig. 3 is a P type metal oxide semiconductor field effect transistor (P-MOSFET).

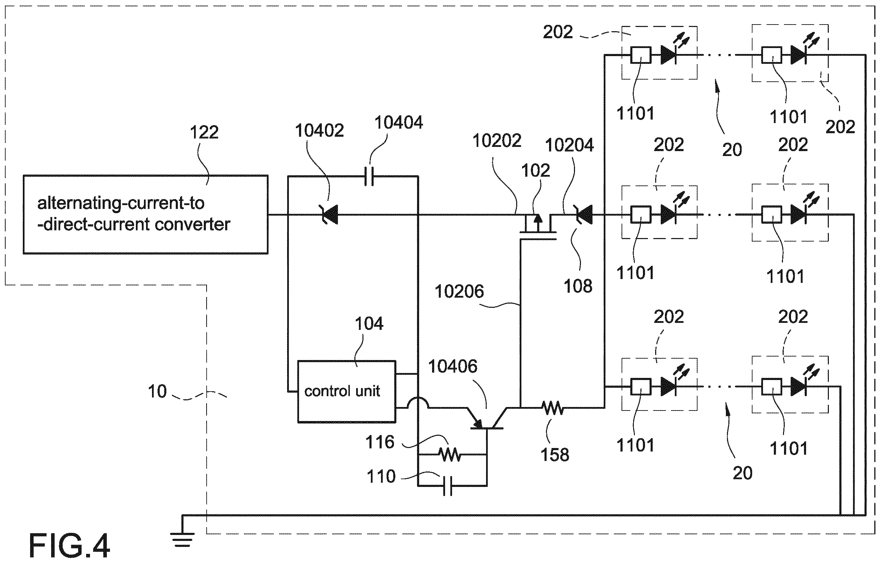

Fig. 4 shows a block diagram of the fourth embodiment of the light emitting diode system of the present invention, The descriptions of the elements shown in Fig. 4 which are the same as the elements shown in Figs. 1∼3 are not repeated here for brevity. Moreover, the light emitting diode system 10 further comprises a controlling side Zener diode 10402, a controlling side capacitor 10404, a first transistor 10406 and an output side resistor 158. The elements mentioned above are electrically connected to each other. The signal voltage unit 102 shown in Fig. 4 is a P type metal oxide semiconductor field effect transistor (P-MOSFET).

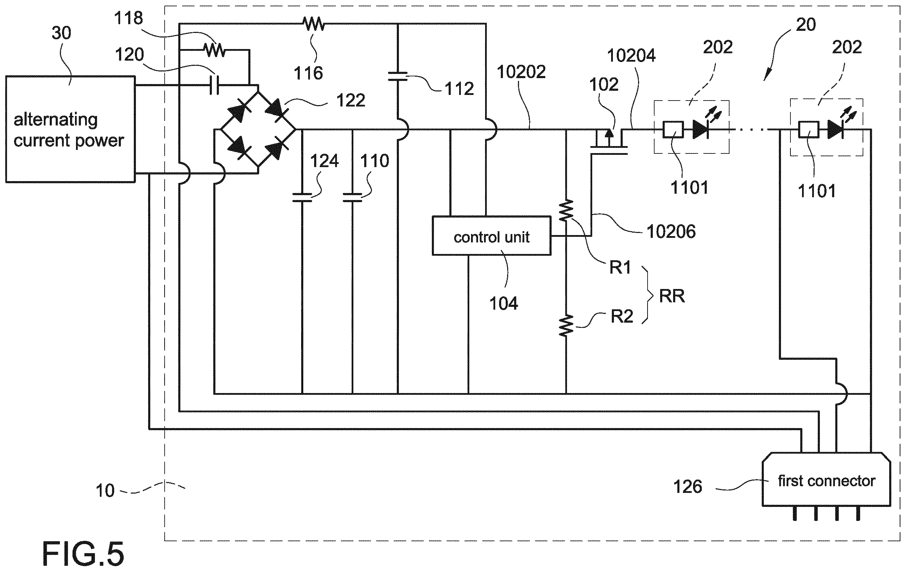

Fig. 5 shows a block diagram of the fifth embodiment of the light emitting diode system of the present invention. The descriptions of the elements shown in Fig. 5 which are the same as the elements shown in Figs. 1-4 are not repeated here for brevity. Moreover, the light emitting diode system 10 further comprises a voltage-dividing resistor circuit RR. The voltage-dividing resistor circuit RR comprises a first voltage-dividing resistor R1 and a second voltage-dividing resistor R2. The elements mentioned above are electrically connected to each other. The signal voltage unit 102 shown in Fig. 5 is a P type metal oxide semiconductor field effect transistor (P-MOSFET). The control unit 104 shown in Fig. 5 has an automatically voltage-decreasing function.

The control unit 104 utilizes the voltage-dividing resistor circuit RR (for example, the internal circuit of the control unit 104 renders that the connection point of the first voltage-dividing resistor R1 and the second voltage-dividing resistor R2 is connected to ground or not connected to ground) to generate the control voltage to determine the conduction rate. In the circuit design, according to the electrical characteristics of the signal voltage unit 102 (for example, the P type metal oxide semiconductor field effect transistor), the resistance values of the first voltage-dividing resistor R1 and the second voltage-dividing resistor R2 are determined. For example but the present invention is not limited to, the first voltage-dividing resistor R1 is 6000 ohms, the second voltage-dividing resistor R2 is 4000 ohms, and the conduction rate of the P type metal oxide semiconductor field effect transistor is fifty percent.

Please refer to Fig. 1 and Fig. 6 at the same time. Fig. 6 shows a waveform diagram of an embodiment of the light signal of the present invention. As shown in Fig. 6, in the normal condition, the control unit 104 controls the signal voltage unit 102 to be turned on completely and fully. At this time, the resistance value of the signal voltage unit 102 is the minimum, so that the voltage of the power output side 10204 is 110 volts. When the control unit 104 controls to decrease the conduction rate of the signal voltage unit 102 according to a predetermined voltage (for example, 60 volts), the voltage of the power output side 10204 is decreased as 60 volts. After that, the control unit 104 controls the signal voltage unit 102 to be turned on completely and fully again, so that the voltage is recovered to 110 volts again to form a pulse wave. According to the control unit 104 each time changing and recovering the conduction rate of the signal voltage unit 102, a plurality of the pulse waves are generated to be combined as the light signal. Moreover, a duration t1 is between each pulse wave. The light emitting diode lamp string 20 receives the light signal to utilize the pulse waves to perform changing lighting.

Moreover, when the light emitting diode lamp string 20 receives the light signal, each light emitting diode unit 202 can utilize a first signal to determine and interpret the meaning of the light signal to perform changing lighting, wherein the first signal comprises the pulse waves meeting the predetermined voltage. Namely, the pulse wave is regarded as the digital signal "1" and the duration t1 is regarded as the digital signal "0". A plurality of the digital signals "1" and "0" are combined as the light signal to drive the light emitting diode unit 202 to perform changing lighting. In another embodiment, the light emitting diode unit 202 utilizes the quantity of the duration t1 to determine and interpret the meaning of the light signal to perform changing lighting. Namely, the pulse wave is regarded as the digital signal "0" and the duration t1 is regarded as the digital signal "1". In this embodiment, the pulse waves do not need to meet the predetermined voltage.

The present invention determines the duration t1 mentioned above, so that the present invention does not have the related art problems. The present invention can improve the ability to determine and interpret the light signal to increase the accuracy.

Moreover, the light emitting diode unit 202 mentioned above comprises an address and data identifier 1101 to perform the conversion and the decoding for the light signal. The address and data identifier 1101 receives the light signal and converts the light signal into digital signals to drive the light emitting diode unit 202 to light, glimmer or flash colorfully or sparklingly, or light fade-in and fade-out.

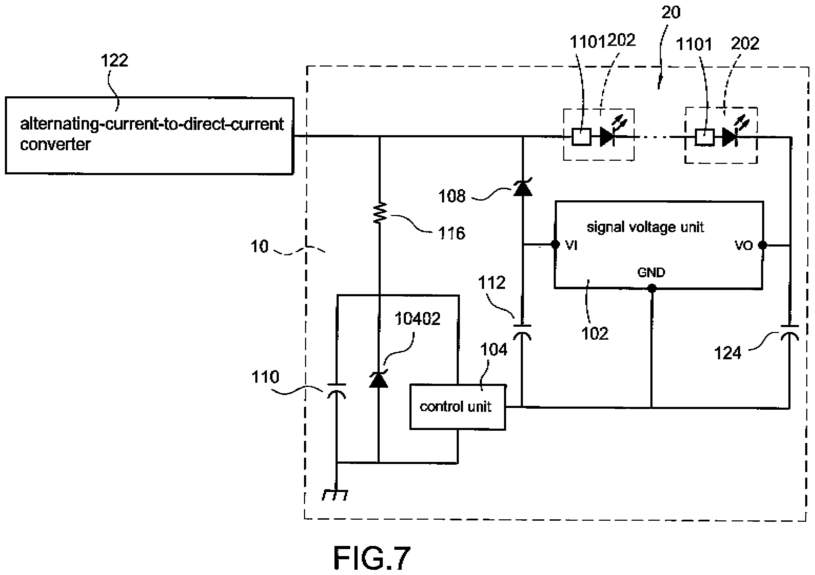

Moreover, in an embodiment of the present invention, the signal voltage unit 102 is a switch electrically connected to a positive side of the light emitting diode lamp string 20. In another embodiment of the present invention, the signal voltage unit 102 is electrically connected to a negative side of the light emitting diode lamp string 20, as shown in following Figs. 7∼9.

Fig. 7 shows a block diagram of the sixth embodiment of the light emitting diode system of the present invention. The elements shown in Fig. 7, which are similar to the elements shown in all figures mentioned above, are not repeated here for brevity. Moreover, the signal voltage unit 102 comprises a voltage input side VI, a voltage output side VO and a first side GND. The light emitting diode system 10 further comprises a first resistor 116, a first capacitor 110, a controlling side Zener diode 10402, a Zener diode 108, a second capacitor 112 and a third capacitor 124. The first resistor 116 is electrically connected to the control unit 104. The first capacitor 110 is electrically connected to the control unit 104. The controlling side Zener diode 10402 is electrically connected to the control unit 104. The Zener diode 108 is electrically connected to the voltage input side VI of the signal voltage unit 102. The second capacitor 112 is electrically connected to voltage input side VI of the signal voltage unit 102. The third capacitor 124 is electrically connected to the voltage output side VO of the signal voltage unit 102.

The signal voltage unit 102 sends a first voltage through the voltage output side VO to the negative side of the light emitting diode lamp string 20. When the control unit 104 sends a control signal to the signal voltage unit 102 and the control signal is a high level voltage, a voltage of the negative side of the light emitting diode lamp string 20 is the first voltage and the high level voltage (namely, similarly generating 110 volts in Fig. 6). When the control unit 104 sends the control signal to the signal voltage unit 102 and the control signal is a low level voltage, the voltage of the negative side of the light emitting diode lamp string 20 is the first voltage and the low level voltage (namely, similarly generating 60 volts in Fig. 6). Therefore, the voltage of the negative side of the light emitting diode lamp string 20 has high-low changes (namely, the light signal in Fig. 6 of the present invention is generated).

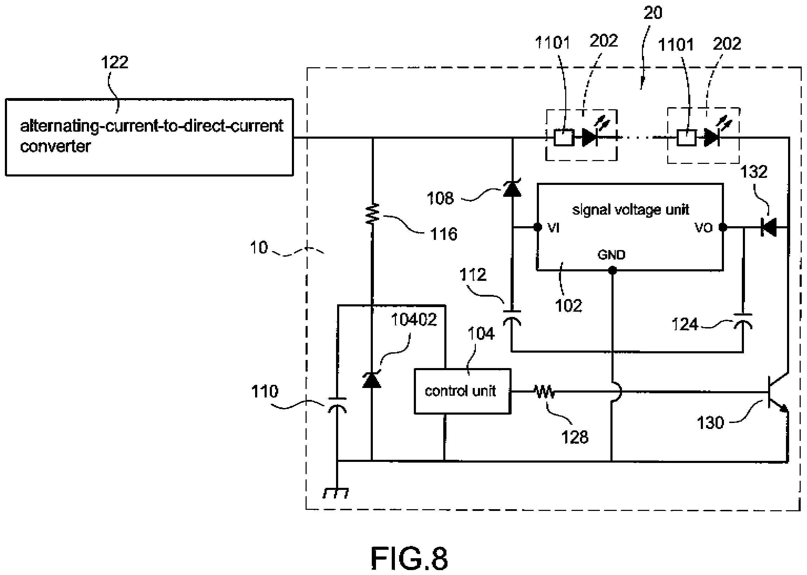

Fig. 8 shows a block diagram of the seventh embodiment of the light emitting diode system of the present invention. The elements shown in Fig. 8, which are similar to the elements shown in all figures mentioned above, are not repeated here for brevity. Moreover, the light emitting diode system 10 further comprises a second resistor 128, a second transistor 130 and a first diode 132. The second resistor 128 is electrically connected to the control unit 104. The second transistor 130 is electrically connected to the second resistor 128. The first diode 132 is electrically connected to the voltage output side VO of the signal voltage unit 102.

When the control unit 104 sends a control signal to the second transistor 130 and the control signal is a high level voltage (to turn on the second transistor 130), the negative side of the light emitting diode lamp string 20 is connected to ground. When the control unit 104 sends the control signal to the second transistor 130 and the control signal is a low level voltage (to turn off the second transistor 130), a voltage of the negative side of the light emitting diode lamp string 20 is a first voltage which is provided by the signal voltage unit 102 through the voltage output side VO. Therefore, the voltage of the negative side of the light emitting diode lamp string 20 has high-low changes (namely, the light signal which is similar to Fig. 6 of the present invention is generated).

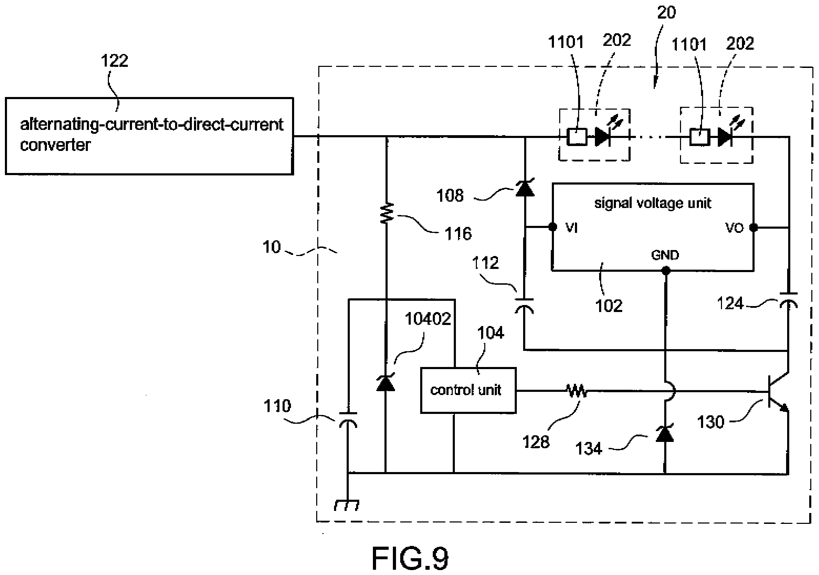

Fig. 9 shows a block diagram of the eighth embodiment of the light emitting diode system of the present invention. The elements shown in Fig. 9, which are similar to the elements shown in all figures mentioned above, are not repeated here for brevity, Moreover, the light emitting diode system 10 further comprises a regulator side Zener diode 134 electrically connected to the first side GND of the signal voltage unit 102.

The signal voltage unit 102 sends a first voltage through the voltage output side VO to the negative side of the light emitting diode lamp string 20. When the control unit 104 sends a control signal to the second transistor 130 and the control signal is a high level voltage (to turn on the second transistor 130), a voltage of the negative side of the light emitting diode lamp string 20 is the first voltage (namely, similarly generating 60 volts in Fig. 6). When the control unit 104 sends the control signal to the second transistor 130 and the control signal is a low level voltage (to turn off the second transistor 130), the voltage of the negative side of the light emitting diode lamp string 20 is the first voltage and a Zener voltage which is provided by the regulator side Zener diode 134 (namely, similarly generating 110 volts in Fig. 6). Therefore, the voltage of the negative side of the light emitting diode lamp string 20 has high-low changes (namely, the light signal which is similar to Fig. 6 of the present invention is generated).

The advantage of the present invention is to generate the light signals easily to drive the light emitting diodes to perform changing lighting. Therefore, the cost of the light signal generation circuit is saved.

## Claims

1. A light emitting diode system (10) comprising:
- a light emitting diode lamp string (20) comprising a plurality of light emitting diode units (202) and configured to receive power supplied through power lines to emit light;
- a signal voltage unit (102) electrically connected to the light emitting diode lamp string (20); and
- a control unit (104) electrically connected to the signal voltage unit (102),
wherein the control unit (104) is configured to drive the signal voltage unit (102) in order to generate a light signal comprising a plurality of pulse waves to be provided to the light emitting diode lamp string (20), thereby adjusting a voltage of the light emitting diode lamp string (20) continuously and repeatedly so that the voltage of the light emitting diode lamp string (20) is a predetermined voltage;
**characterized in that**:
- -the control unit (104) is configured to provide a control voltage to the signal voltage unit (102), thereby controlling a conduction rate of the signal voltage unit (102) in order to generate the light signal;
- each of the light emitting diode units (202) comprises an address and data identifier (1101) configured to perform a conversion and a decoding of the light signal to obtain a lighting mode of the light signal, wherein the address and data identifier (1101) is configured to receive the light signal and to convert the light signal into digital signals to drive the light emitting diode unit (202) so as to emit light, glimmer or flash colorfully or sparklingly, or fade-in and fade-out based on the obtained lighting mode.

2. The light emitting diode system (10) as defined in claim 1, wherein the light emitting diode system (10) further comprises:
a controlling side zener diode (10402) electrically connected to the control unit (104), wherein a cathode of the controlling side zener diode (10402) is coupled to a second terminal of the control unit (104) and to a power input side (10202) of the signal voltage unit (102); wherein an anode of the controlling side zener diode (10402) is coupled to a first terminal of the control unit (104),
wherein the controlling side zener diode (10402) is configured to supply power to the control unit (104); the controlling side zener diode (10402), the signal voltage unit (102) and the light emitting diode lamp string (20) are connected in series.

3. The light emitting diode system (10) as defined in claim 1, wherein the light emitting diode system (10) further comprises:
a voltage-dividing resistor circuit (RR) electrically connected to the signal voltage unit (102) and the control unit (104),
wherein the control unit (104) is configured to utilize the voltage-dividing resistor circuit (RR) to generate a control voltage to determine the conduction rate of the signal voltage unit (102),
wherein the voltage-dividing resistor circuit (RR) comprises:
a first voltage-dividing resistor (R1) electrically connected to the signal voltage unit (102) and the control unit (104); and
a second voltage-dividing resistor (R2) electrically connected to the signal voltage unit (102), the control unit (104) and the first voltage-dividing resistor (R1).

4. The light emitting diode system (10) as defined in claim 1, wherein the light emitting diode system (10) further comprises:
a first resistor (116) electrically connected to the control unit (104), wherein one side of the first resistor (116) is connected to a fourth terminal of the control unit (104);
a first capacitor (110) electrically connected to the control unit (104), wherein one side of the first capacitor (110) is coupled to a power input side (10202) of the signal voltage unit (102) and to a first terminal of the control unit (104); wherein the other side of the first capacitor (110) is coupled to a third terminal of the control unit (104) and to a second terminal of the light emitting diode lamp string (20);
a zener diode (108) electrically connected to the signal voltage unit (102), wherein a cathode of the zener diode (108) is coupled to the power input side (10202) of the signal voltage unit (102) and to the first terminal of the control unit (104); wherein an anode of the zener diode (108) is coupled to the third terminal of the control unit (104) and to the second terminal of the light emitting diode lamp string (20);
a second capacitor (112) electrically connected to the control unit (104), wherein one side of the second capacitor (112) is coupled to the fourth terminal of the control unit (104); wherein the other side of the second capacitor (112) is coupled to the third terminal of the control unit (104) and to the second terminal of the light emitting diode lamp string (20);
a third capacitor (124) electrically connected to the control unit (104), wherein the third capacitor (124) is coupled in parallel to the first capacitor (110);
an input side resistor (118) electrically connected to the first resistor (116), wherein one side of the input side resistor (118) is connected to the other side of the first resistor (116); and
an input side capacitor (120) electrically connected to the first resistor (116), wherein one side of the input side capacitor (120) is connected to the other side of the first resistor (116); the other side of the input side capacitor (120) is connected to the other side of the input side resistor (118).

5. The light emitting diode system (10) as defined in claim 1, wherein the light emitting diode system (10) further comprises:
a controlling side capacitor (10404) electrically connected to the control unit (104), wherein one side of the controlling side capacitor (10404) is coupled to a first terminal of the control unit (104); wherein the other side of the controlling side capacitor (10404) is coupled to a second terminal of the control unit (104) and to a power input side (10202) of the signal voltage unit (102);
a first transistor (10406) electrically connected to the control unit (104), wherein an emitter of the first transistor (10406) is coupled to a third terminal of the control unit (104); wherein a collector of the first transistor (10406) is coupled to a controlled side (10206) of the signal voltage unit (102); wherein a base of the first transistor (10406) is coupled to the second terminal of the control unit (104); and
an output side resistor (158) electrically connected to the collector of the first transistor (10406) and the signal voltage unit (102), wherein one side of the output side resistor (158) is coupled to the collector of the first transistor (10406) and to the power input side (10202) of the signal voltage unit (102); wherein the other side of the output side resistor (158) is coupled to a power output side (10204) of the signal voltage unit (102) and to a first terminal of the light emitting diode lamp string (20).

6. The light emitting diode system (10) as defined in claim 2, wherein the light emitting diode system (10) further comprises:
an alternating-current-to-direct-current converter (122) electrically connected to the control unit (104),
wherein the alternating-current-to-direct-current converter (122), the controlling side zener diode (10402), the signal voltage unit (102) and the light emitting diode lamp string (20) are connected in series.

7. The light emitting diode system (10) as defined in claim 1, wherein the light emitting diode system (10) further comprises:
a first connector (126) electrically connected to the control unit (104) and the light emitting diode lamp string (20); and
a second connector (154) electrically connected to the first connector (126).

8. The light emitting diode system (10) as defined in claim 1, wherein the signal voltage unit (102) is a switch electrically connected to a positive side of the light emitting diode lamp string (20).

9. The light emitting diode system (10) as defined in claim 1, wherein the signal voltage unit (102) is electrically connected to a negative side of the light emitting diode lamp string (20), wherein the signal voltage unit (102) comprises a voltage input side (VI), a voltage output side (VO) and a first side (GND), and wherein the light emitting diode system (10) further comprises:
a first resistor (116) electrically connected to the control unit (104), wherein one side of the first resistor (116) is connected to a first terminal of the control unit (104);
a first capacitor (110) electrically connected to the first terminal of the control unit (104), wherein one side of the first capacitor (110) is connected to the control unit (104);
a controlling side zener diode (10402) electrically connected to the control unit (104), wherein a cathode of the controlling side zener diode (10402) is coupled to the first terminal of the control unit (104); wherein an anode of the controlling side zener diode (10402) is coupled to a second terminal of the control unit (104);
a zener diode (108) electrically connected to the voltage input side (VI) of the signal voltage unit (102), wherein a cathode of the zener diode (108) is connected to the other side of the first resistor (116), wherein an anode of the zener diode (108) is connected to the voltage input side (VI) of the signal voltage unit (102);
a second capacitor (112) electrically connected to the voltage input side (VI) of the signal voltage unit (102), wherein one side of the second capacitor (112) is connected to the voltage input side (VI) of the signal voltage unit (102); the other side of the second capacitor (112) is connected to the first side (GND) of the signal voltage unit (102); and
a third capacitor (124) electrically connected to the voltage output side (VO) of the signal voltage unit (102), wherein one side of the third capacitor (124) is connected to the voltage output side (VO) of the signal voltage unit (102); the other side of the third capacitor (124) is connected to the first side (GND) of the signal voltage unit (102).

10. The light emitting diode system (10) as defined in claim 9, wherein the light emitting diode system (10) further comprises:
a second resistor (128) electrically connected to a third terminal of the control unit (104), wherein one side of the second resistor (128) is connected to the control unit (104);
a second transistor (130) electrically connected to the second resistor (128), wherein a base of the second transistor (130) is connected to the other side of the second resistor (128); an emitter of the second transistor (130) is connected to the first side (GND) of the signal voltage unit (102); a collector of the second transistor (130) is connected to the light emitting diode lamp string (20); and
a first diode (132) electrically connected to the voltage output side (VO) of the signal voltage unit (102), wherein a cathode of the first diode (132) is connected to the voltage output side (VO) of the signal voltage unit (102), wherein an anode of the first diode (132) is connected to the light emitting diode lamp string (20) and the collector of the second transistor (130).

11. The light emitting diode system (10) as defined in claim 9, wherein the light emitting diode system (10) further comprises:
a second resistor (128) electrically connected to a third terminal of the control unit (104), wherein one side of the second resistor (128) is connected to the control unit (104);
a second transistor (130) electrically connected to the second resistor (128), wherein a base of the second transistor (130) is connected to the other side of the second resistor (128); a collector of the second transistor (130) is connected to the first side (GND) of the signal voltage unit (102); and
a regulator side zener diode (134) electrically connected to the first side (GND) of the signal voltage unit (102), wherein a cathode of the regulator side zener diode (134) is connected to the first side (GND) of the signal voltage unit (102), wherein an anode of the regulator side zener diode (134) is connected to an emitter of the second transistor (130).

## Patentansprüche

1. Ein lichtemittierendes Diodensystem (10), umfassend:
- eine lichtemittierende Diodenleuchtkette (20), die eine Vielzahl von lichtemittierenden Diodeneinheiten (202) umfasst und konfiguriert ist, um Energie zu empfangen, die durch Stromleitungen zugeführt wird, um Licht zu emittieren;
- eine Signalspannungseinheit (102), die elektrisch mit der lichtemittierende Diodenleuchtkette (20) verbunden ist; und
- eine Steuereinheit (104), die elektrisch mit der Signalspannungseinheit (102) verbunden ist,
wobei die Steuereinheit (104) konfiguriert ist, um die Signalspannungseinheit (102) zu treiben, um ein Lichtsignal zu erzeugen, das eine Vielzahl von gepulsten Wellen umfasst, die der lichtemittierende Diodenleuchtkette (20) zuzuführen sind, um eine Spannung der lichtemittierende Diodenleuchtkette (20) kontinuierlich und wiederholt einzustellen, so dass die Spannung der lichtemittierende Diodenleuchtkette (20) eine vorbestimmte Spannung ist,
**dadurch gekennzeichnet, dass**:
- die Steuereinheit (104) konfiguriert ist, um der Signalspannungseinheit (102) eine Steuerspannung zur Verfügung zu stellen, wodurch eine Leitungsrate der Signalspannungseinheit (102) zum Erzeugen des Lichtsignals gesteuert wird;
- jede der lichtemittierenden Diodeneinheiten (202) einen Adress- und Datenidentifikator (1101) aufweist, der konfiguriert ist, um das Lichtsignal umzuwandeln und zu dekodieren, um einen Beleuchtungsmodus vom Lichtsignal zu erhalten, wobei der Adress- und Datenidentifikator (1101) konfiguriert ist, um das Lichtsignal zu empfangen und das Lichtsignal in digitale Signale umzuwandeln, um die lichtemittierende Diodeneinheit (202) zu steuern, um Licht, farbige oder funkelnde Blitze oder Ein- oder Ausgangsblenden basierend auf dem erhaltenen Beleuchtungsmodus zu emittieren.

2. Das lichtemittierende Diodensystem (10) nach Anspruch 1, wobei das lichtemittierende Diodensystem (10) ferner umfasst:
eine steuerseitige Zenerdiode (10402), die elektrisch mit der Steuereinheit (104) verbunden ist, wobei eine Kathode der steuerseitigen Zenerdiode (10402) mit einem zweiten Anschluss der Steuereinheit (104) und mit einer Leistungseingangsseite (10202) der Signalspannungseinheit (102) gekoppelt ist; wobei eine Anode der steuerseitigen Zenerdiode (10402) mit einem ersten Anschluss der Steuereinheit (104) gekoppelt ist,
wobei die steuerseitige Zenerdiode (10402) konfiguriert ist, um die Steuereinheit (104) mit Strom zu versorgen; wobei die steuerseitige Zenerdiode (10402), die Signalspannungseinheit (102) und die Diodenleuchtkette (20) in Reihe geschaltet sind.

3. Das lichtemittierende Diodensystem (10) nach Anspruch 1, wobei das lichtemittierende Diodensystem (10) ferner umfasst:
eine Spannungsteiler-Widerstandsschaltung (RR), die elektrisch mit der Signalspannungseinheit (102) und der Steuereinheit (104) verbunden ist,
wobei die Steuereinheit (104) konfiguriert ist, um die Spannungsteiler-Widerstandsschaltung (RR) zu verwenden, um eine Steuerspannung zu erzeugen, um eine Leitungsrate der Signalspannungseinheit (102) zu bestimmen,
wobei die Spannungsteiler-Widerstandsschaltung (RR) umfasst:
einen ersten Spannungsteilungswiderstand (R1), der elektrisch mit der Signalspannungseinheit (102) und der Steuereinheit (104) verbunden ist; und
einen zweiten Spannungsteilungswiderstand (R2), der elektrisch mit der Signalspannungseinheit (102), der Steuereinheit (104) und dem ersten Spannungsteilungswiderstand (R1) verbunden ist.

4. Das lichtemittierende Diodensystem (10) nach Anspruch 1, wobei das lichtemittierende Diodensignal (10) ferner umfasst:
einen ersten Widerstand (116), der elektrisch mit der Steuereinheit (104) verbunden ist, wobei eine Seite des ersten Widerstands (116) mit einem vierten Anschluss der Steuereinheit (104) verbunden ist;
einen ersten Kondensator (110), der elektrisch mit der Steuereinheit (104) verbunden ist; wobei eine Seite des ersten Kondensators (110) mit einer Leistungseingangsseite (10202) der Signalspannungseinheit (102) und einem ersten Anschluss der Steuereinheit (104) gekoppelt ist; wobei die andere Seite des ersten Kondensators (110) mit einem dritten Anschluss der Steuereinheit (104) und einem zweiten Anschluss der lichtemittierenden Diodenleuchtkette (20) gekoppelt ist;
eine Zenerdiode (108), die elektrisch mit der Signalspannungseinheit (102) verbunden ist, wobei eine Kathode der Zenerdiode (108) mit der Leistungseingangsseite (10202) der Signalspannungseinheit (102) und mit dem ersten Anschluss der Steuereinheit (104) gekoppelt ist; wobei eine Anode der Zenerdiode (108) mit dem dritten Anschluss der Steuereinheit (104) und mit dem zweiten Anschluss der Lampenkette (20) der Leuchtdiode gekoppelt ist;
einen zweiten Kondensator (112), der elektrisch mit der Steuereinheit (104) verbunden ist, wobei eine Seite des zweiten Kondensators (112) mit dem vierten Anschluss der Steuereinheit (104) gekoppelt ist; wobei die andere Seite des zweiten Kondensators (112) mit dem dritten Anschluss der Steuereinheit (104) und mit dem zweiten Anschluss der Diodenleuchtkette (20) gekoppelt ist;
einen dritten Kondensator (124), der elektrisch mit der Steuereinheit (104) verbunden ist, wobei der dritte Kondensator (124) parallel zu dem ersten Kondensator (110) gekoppelt ist;
einen eingangsseitigen Widerstand (118), der elektrisch mit dem ersten Widerstand (116) verbunden ist, wobei eine Seite des eingangsseitigen Widerstands (118) mit der anderen Seite des ersten Widerstands (116) verbunden ist; und
einen eingangsseitigen Kondensator (120), der elektrisch mit dem ersten Widerstand (116) verbunden ist, wobei eine Seite des eingangsseitigen Kondensators (120) mit der anderen Seite des ersten Widerstands (116) verbunden ist; die andere Seite des eingangsseitigen Kondensators (120) mit der anderen Seite des eingangsseitigen Widerstands (118) verbunden ist.

5. Das lichtemittierende Diodensystem (10) nach Anspruch 1, wobei das lichtemittierende Diodensystem (10) ferner umfasst:
einen steuerseitigen Kondensator (10404), der elektrisch mit der Steuereinheit (104) verbunden ist, wobei eine Seite des steuerseitigen Kondensators (10404) mit einem ersten Anschluss der Steuereinheit (104) gekoppelt ist, wobei die andere Seite des steuerseitigen Kondensators (10404) mit einem zweiten Anschluss der Steuereinheit (104) und mit einer Versorgungseingangsseite (10202) der Signalspannungseinheit (102) gekoppelt ist;
einen ersten Transistor (10406), der elektrisch mit der Steuereinheit (104) verbunden ist, wobei ein Emitter des ersten Transistors (10406) mit einem dritten Anschluss der Steuereinheit (104) gekoppelt ist, wobei ein Kollektor des ersten Transistors (10406) mit einer Steuerseite (10206) der Signalspannungseinheit (102) gekoppelt ist; wobei eine Basis des ersten Transistors (10406) mit dem zweiten Anschluss der Steuereinheit (104) gekoppelt ist; und
einen ausgangsseitigen Widerstand (158), der elektrisch mit dem Kollektor des ersten Transistors (10406) und der Signalspannungseinheit (102) verbunden ist, wobei eine Seite des ausgangsseitigen Widerstands (158) mit dem Kollektor des ersten Transistors (10406) und der Versorgungseingangsseite (10202) der Ausgangsspannungseinheit (102) gekoppelt ist; wobei die andere Seite des ausgangsseitigen Widerstands (158) mit einer Versorgungsausgangsseite (102) der Ausgangsspannungseinheit (102) und einem ersten Anschluss der Diodenleuchtkette (20) gekoppelt ist.

6. Das lichtemittierende Diodensystem (10) nach Anspruch 2, wobei das lichtemittierende Diodensystem (10) ferner umfasst:
einen Wechsel- zu Gleichstrom-Wechselrichter (122), der elektrisch mit der Steuereinheit (104) verbunden ist, wobei der Wechsel- zu Gleichstrom -Wechselrichter (122), die Zenerdiode auf der Steuerseite (10402), die Signalspannungseinheit (102) und die Diodenleuchtkette (20) in Reihe geschaltet sind.

7. Das lichtemittierende Diodensystem (10) nach Anspruch 1, wobei das lichtemittierende Diodensystem (10) ferner umfasst:
einen ersten Verbinder (126), der elektrisch mit der Steuereinheit (104) und der Diodenleuchtkette (20) verbunden ist; und
einen zweiten Verbinder (154), der elektrisch mit dem ersten Verbinder (126) verbunden ist.

8. Das lichtemittierende Diodensystem (10) nach Anspruch 1, wobei die Signalspannungseinheit (102) ein Schalter ist, der elektrisch mit einer positiven Seite der Lampenkette (20) der lichtemittierenden Diode verbunden ist.

9. Das lichtemittierende Diodensystem (10) nach Anspruch 1, wobei die Signalspannungseinheit (102) elektrisch mit einer negativen Seite der lichtemittierenden Diodenleuchtkette (20) verbunden ist, wobei die Signalspannungseinheit (102) eine Spannungseingangsseite (VI), eine Spannungsausgangsseite (VO) und eine erste Seite (GND) beinhaltet, und wobei das lichtemittierende Diodensystem (10) ferner beinhaltet:
einen ersten Widerstand (116), der elektrisch mit der Steuereinheit (104) verbunden ist, wobei eine Seite des ersten Widerstands (116) mit einem ersten Anschluss der Steuereinheit (104) verbunden ist;
einen ersten Kondensator (110), der elektrisch mit dem ersten Anschluss der Steuereinheit (104) verbunden ist, wobei eine Seite des ersten Kondensators (110) mit der Steuereinheit (104) verbunden ist;
eine steuerseitige Zenerdiode (10402), die elektrisch mit der Steuereinheit (104) verbunden ist, wobei eine Kathode der steuerseitigen Zenerdiode (10402) mit dem ersten Anschluss der Steuereinheit (104) gekoppelt ist; wobei eine Anode der steuerseitigen Zenerdiode (10402) mit einem zweiten Anschluss der Steuereinheit (104) gekoppelt ist;
eine Zenerdiode (108), die elektrisch mit der Spannungseingangsseite (VI) der Signalspannungseinheit (102) verbunden ist, wobei eine Kathode der Zenerdiode (108) mit der anderen Seite des ersten Widerstands (116) verbunden ist, wobei eine Anode der Zenerdiode (108) mit der Spannungseingangsseite (VI) der Signalspannungseinheit (102) verbunden ist;
einen zweiten Kondensator (112), der elektrisch mit der Spannungseingangsseite (VI) der Signalspannungseinheit (102) verbunden ist, wobei eine Seite des zweiten Kondensators (112) mit der Spannungseingangsseite (VI) der Signalspannungseinheit (102) verbunden ist; die andere Seite des zweiten Kondensators (112) mit der ersten Seite (GND) der Signalspannungseinheit (102) verbunden ist; und
einen dritten Kondensator (124), der elektrisch mit der Spannungsausgangsseite (VO) der Signalspannungseinheit (102) verbunden ist, wobei eine Seite des dritten Kondensators (124) mit der Spannungsausgangsseite (VO) der Signalspannungseinheit (102) verbunden ist; die andere Seite des dritten Kondensators (124) ist mit der ersten Seite (GND) der Signalspannungseinheit (102) verbunden.

10. Das lichtemittierende Diodensystem (10) nach Anspruch 9, wobei das lichtemittierende Diodensystem (10) ferner umfasst:
einen zweiten Widerstand (128), der elektrisch mit einem dritten Anschluss der Steuereinheit (104) verbunden ist;
Wobei eine Seite des zweiten Widerstands (128) mit der Steuereinheit (104) verbunden ist,
einen zweiten Transistor (130), der elektrisch mit dem zweiten Widerstand (128) verbunden ist, wobei eine Basis des zweiten Transistors (130) mit der anderen Seite des zweiten Widerstands (128) verbunden ist; ein Emitter des zweiten Transistors (130) mit der ersten Seite (GND) der Signalspannungseinheit (102) verbunden ist; ein Kollektor des zweiten Transistors (130) mit der Diodenleuchtkette (20) verbunden ist; und
eine erste Diode (132), die elektrisch mit der Spannungsausgangsseite (VO) der Signalspannungseinheit (102) verbunden ist, wobei eine Kathode der ersten Diode (132) mit der Spannungsausgangsseite (VO) der Signalspannungseinheit (102) verbunden ist, wobei eine Anode der ersten Diode (132) mit der lichtemittierenden Diodenleuchtkette (20) und dem Kollektor des zweiten Transistors (130) verbunden ist.
aaaa

11. Das lichtemittierende Diodensystem (10) nach Anspruch 9, wobei das lichtemittierende Diodensystem (10) ferner umfasst:
einen zweiten Widerstand (128), der elektrisch mit einem dritten Anschluss der Steuereinheit (104) verbunden ist,
wobei eine Seite des zweiten Widerstandes (128) mit der Steuereinheit (104) verbunden ist;
einen zweiten Transistor (130), der elektrisch mit dem zweiten Widerstand (128) verbunden ist, wobei eine Basis des zweiten Transistors (130) mit der anderen Seite des zweiten Widerstands (128) verbunden ist; ein Kollektor des zweiten Transistors (130) mit der ersten Seite (GND) der Signalspannungseinheit (102) verbunden ist; und
eine Zenerdiode auf der Reglerseite (134), die elektrisch mit der ersten Seite (GND) der Signalspannungseinheit (102) verbunden ist, wobei eine Kathode der Zenerdiode auf der Reglerseite (134) mit der ersten Seite (GND) der Signalspannungseinheit (102) verbunden ist, wobei eine Anode der Zenerdiode auf der Reglerseite mit einem Sender des zweiten Transistors (130) verbunden ist.

## Revendications

1. Un système de diodes électroluminescentes (10) comprenant :
- une chaîne de lampes à diode électroluminescentes (20) comprenant une pluralité d'unités à diodes électroluminescentes (202) et configurées pour recevoir de l'énergie fournie par des lignes électriques afin d'émettre de la lumière ;
- une unité de tension de signal (102) connectée électriquement à la chaîne de lampes à diodes électroluminescentes (20); et
- une unité de commande (104) connectée électriquement à l'unité de tension de signal (102),
dans lequel l'unité de commande (104) est configurée pour commander l'unité de tension de signal (102) afin de générer un signal lumineux comprenant une pluralité d'ondes pulsées devant être fournies à la chaîne de lampes à diodes électroluminescentes (20), ajustant ainsi une tension de la chaîne de lampe à diodes électroluminescentes (20) de manière continue et répétée, de sorte que la tension de la chaîne de lampes à diodes électroluminescentes (20) soit une tension prédéterminée,
**caractérisé en ce que** :
- l'unité de commande (104) est configurée pour fournir une tension de commande à l'unité de tension de signal (102), commandant ainsi un taux de conduction de l'unité de tension de signal (102) afin de générer le signal lumineux ;
- chacune des unités à diodes électroluminescentes (202) comporte un identifiant d'adresse et de données (1101) configuré pour effectuer une conversion et un décodage du signal lumineux pour obtenir un mode d'éclairage du signal lumineux, dans lequel les identifiants d'adresse et de données (1101) sont configurés pour recevoir le signal lumineux et pour convertir le signal lumineux en signaux numériques pour commander l'unité à diodes électroluminescente (202) afin d'émettre de la lumière, des lueurs ou des flash colorés ou étincelants, ou des fondues en entrées ou en sortie sur la base du mode d'éclairage obtenu.

2. Le système de diodes électroluminescentes (10) tel que défini dans la revendication 1, dans lequel le système de diodes électroluminescentes (10) comporte en outre :
une diode zener côté commande (10402) connectée électriquement à l'unité de commande (104), dans laquelle une cathode de la diode zener côté commande (10402) est couplée à une seconde électrode de l'unité de commande (104) et à un côté d'entrée de puissance (10202) de l'unité de tension de signal (102) ; dans lequel une anode de la diode zener côté commande (10402) est couplée à une première électrode de l'unité de commande (104),
dans lequel la diode zener côté commande (&0402) est configurée pour fournir de l'énergie à l'unité de commande (104) ; la diode zener côté commande (10402), l'unité de tension de signal (102) et la chaîne de lampes à diodes électroluminescentes (20) étant connectées en série.

3. Le système de diodes électroluminescentes (10) tel que défini dans la revendication 1, dans lequel le système de diodes électroluminescentes (10) comprend en outre:
un circuit de résistances diviseur de tension (RR) connecté électriquement à l'unité de tension de signal (102) et à l'unité de commande (104),
dans lequel l'unité de commande (104) est configurée pour utiliser le circuit de résistances diviseur de tension (RR) afin de générer une tension de commande afin de déterminer un taux de conduction de l'unité de tension de signal (102),
dans lequel le circuit de résistance diviseur de tension (RR) comprend:
une première résistance de division de tension (R1) connectée électriquement à l'unité de tension de signal (102) et à l'unité de commande (104); et
une deuxième résistance de division de tension (R2) connectée électriquement à l'unité de tension de signal (102), à l'unité de commande (104) et à la première résistance de division de tension (R1).

4. Le système de diodes électroluminescentes (10) tel que défini dans la revendication 1, dans lequel le signal à diodes électroluminescentes (10) comporte en outre :
une première résistance (116) connectée électriquement à l'unité de commande (104), dans lequel un côté de la première résistance (116) est connecté à une quatrième électrode de l'unité de commande (104) ;
un premier condensateur (110) connecté électriquement à l'unité de commande (104); dans lequel un côté du premier condensateur (110) est couplé à un côté d'entrée d'alimentation (10202) de l'unité de tension de signal (102) et à une première électrode de l'unité de commande (104) ; dans lequel l'autre côté du premier condensateur (110) est couplée à une troisième électrode de l'unité de commande (104) et à une seconde électrode de la chaîne de lampe à diodes électroluminescentes (20) ;
une diode Zener (108) connectée électriquement à l'unité de tension de signal (102), dans lequel une cathode de la diode zener (108) est couplée au côté d'entrée d'alimentation (10202) de l'unité de tension de signal (102) et à la première électrode de l'unité de commande (104) ; dans lequel une anode de la diode zener (108) est couplée à la troisième électrode de l'unité de commande (104) et à la seconde électrode de la chaîne de lampes à diodes électroluminescentes (20) ;
un second condensateur (112) connecté électriquement à l'unité de commande (104), dans lequel un côté du second condensateur (112) est couplé à la quatrième électrode de l'unité de commande (104); dans lequel l'autre côté du second condensateur (112) est couplé à la troisième électrode de l'unité de commande (104) et à la seconde électrode de la chaîne de lampes à diodes électroluminescentes (20) ;
un troisième condensateur (124) connecté électriquement à l'unité de commande (104), dans lequel le troisième condensateur (124) est couplé en parallèle au premier condensateur (110) ;
une résistance côté entrée (118) connectée électriquement à la première résistance (116), dans lequel un côté de la résistance côté entrée (118) est connecté à l'autre côté de la première résistance (116) ; et
un condensateur côté entrée (120) connecté électriquement à la première résistance (116),dans lequel un côté du condensateur côté entrée (120) est connecté à l'autre côté de la première résistance (116) ; l'autre côté du condensateur côté entrée (120) est connecté à l'autre côté de la résistance côté entrée (118).

5. Le système de diodes électroluminescentes (10) tel que défini dans la revendication 1, dans lequel le système de diodes électroluminescentes (10) comprend en outre:
un condensateur côté commande (10404) connecté électriquement à l'unité de commande (104), dans lequel un côté du condensateur côté commande (10404) est couplé à une première électrode de l'unité de commande (104), dans lequel l'autre côté du condensateur côté commande (10404) est couplé à une seconde électrode de l'unité de commande (104) et à un côté d'entrée d'alimentation (10202) de l'unité de tension de signal (102);
un premier transistor (10406) connecté électriquement à l'unité de commande (104), dans lequel un émetteur du premier transistor (10406) est couplé à une troisième électrode de l'unité de commande (104), dans lequel un collecteur du premier transistor (10406) est couplée à un côté commandé (10206) de l'unité de tension de signal (102); dans lequel une base du premier transistor (10406) est couplée à la seconde électrode de l'unité de commande (104) ; et
une résistance côté sortie (158) connectée électriquement au collecteur du premier transistor (10406) et à l'unité de tension de signal (102), dans lequel un côté de la résistance côté sortie (158) est couplé au collecteur du premier transistor (10406) et au côté d'entrée d'alimentation (10202) de l'unité de tension de sortie (102) ; dans lequel l'autre côté de la résistance côté sortie (158) est couplée à un côté de sortie d'alimentation (102) de l'unité de tension de sortie (102) et à une première électrode de la chaîne de lampes à diodes électroluminescentes (20).

6. Le système de diodes électroluminescentes (10) tel que défini dans la revendication 2, dans lequel le système de diodes électroluminescentes (10) comprend en outre:
un convertisseur de courant alternatif en courant continu (122) connecté électriquement à l'unité de commande (104), dans lequel le convertisseur de courant alternatif en courant continu (122), la diode zener du côté de commande (10402), l'unité de tension de signal (102) et la chaîne de lampes à diodes électroluminescentes (20) sont connectés en série.

7. Le système de diodes électroluminescentes (10) tel que défini dans la revendication 1, dans lequel le système de diodes électroluminescentes (10) comprend en outre:
un premier connecteur (126) connecté électriquement à l'unité de commande (104) et à la chaîne de lampes à diodes électroluminescentes (20) ; et
un second connecteur (154) connecté électriquement au premier connecteur (126).

8. Le système de diodes électroluminescentes (10) tel que défini dans la revendication 1, dans lequel l'unité de tension de signal (102) est un commutateur connecté électriquement à un côté positif de la chaîne de lampes à diodes électroluminescentes (20).

9. Le système de diodes électroluminescentes (10) tel que défini dans la revendication 1, dans lequel l'unité de tension de signal (102) est connectée électriquement à un côté négatif de la chaîne de lampes à diodes électroluminescentes (20), dans lequel l'unité de tension de signal (102) comprend un côté entrée de tension (VI), un côté sortie de tension (VO) et un premier côté (GND), et dans lequel le système de diodes électroluminescentes (10) comprend en outre:
une première résistance (116) connectée électriquement à l'unité de commande (104) dans lequel un côté de la première résistance (116) est connectée à une première électrode de l'unité de commande (104);
un premier condensateur (110) connecté électriquement à la première électrode de l'unité de commande (104), dans lequel un côté du premier condensateur (110) est connecté à l'unité de commande (104);
une diode zener côté commande (10402) connectée électriquement à l'unité de commande (104), dans lequel une cathode de la diode zener côté commande (10402) est couplée à la première électrode de l'unité de commande (104) ; dans lequel une anode de la diode zener côté commande (10402) est couplée à une seconde électrode de l'unité de commande (104) ;
une diode Zener (108) connectée électriquement au côté entrée de tension (VI) de l'unité de tension de signal (102), dans lequel une cathode de la diode zener (108) est connecté à l'autre côté de la première résistance (116), dans lequel une anode de la diode zener (108) est connectée au côté d'entrée de tension (VI) de l'unité de tension de signal (102) ;
un second condensateur (112) connecté électriquement au côté entrée de tension (VI) de l'unité de tension de signal (102), dans leque un côté du second condensateur (112) est connecté au côté d'entrée de tension (VI) de l'unité de tension de signal (102) ; l'autre côté du second condensateur (112) est connecté au premier côté (GND) de l'unité de tension de signal (102) ; et
un troisième condensateur (124) connecté électriquement au côté sortie de tension (VO) de l'unité de tension de signal (102), dans lequel un côté du troisième condensateur (124) est connecté au côté de sortie de tension (VO) de l'unité de tension de signal (102) ; l'autre côté du troisième condensateur (124) est connecté au premier côté (GND) de l'unité de tension de signal (102).

10. Le système de diodes électroluminescentes (10) tel que défini dans la revendication 9,d ans lequel le système de diodes électroluminescentes (10) comprend en outre:
une deuxième résistance (128) connectée électriquement à une troisième électrode de l'unité de commande (104);
un second transistor (130) connecté électriquement à la seconde résistance (128), dans lequel une base du second transistor (130) est connecté à l'auter côté de la seconde résistance (128) ; un émetteur du second transistor (130) est connecté au premier côté (GND) de l'unité de tension de signal (102) ; un collecteur du second transistor (130) est connecté à la chaîne de lampe de diodes électroluminescentes (20) ; et
une première diode (132) connectée électriquement au côté sortie de tension (VO) de l'unité de tension de signal (102), dans lequel une cathode de la première diode (132) est connectée au côté sortie de tension (VO) de l'unité de tension de signal (102), dans lequel une anode de la première diode (132) est connecté à la chaîne de lampe de diodes électroluminescentes (20) et au collecteur du second transistor (130).

11. Le système de diodes électroluminescentes (10) tel que défini dans la revendication 9, dans lequel le système de diodes électroluminescentes (10) comprend en outre:
une seconde résistance (128) électriquement connectée à une troisième électrode de l'unité de commande (104),
dans lequel un côté de la seconde résistance (128) est connecté à l'unité de commande (104) ;
un second transistor (130) électriquement connecté à la seconde résistance (128), dans lequel une base du second transistor (130) est connectée à l'autre côté de la seconde résistance (128) ; un collecteur du second transistor (130) est connecté au premier côté (GND) de l'unité de tension de signal (102) ; et
une diode zener du côté régulateur (134) connectée électriquement au premier côté (GND) de l'unité de tension de signal (102), dans lequel une cathode de la diode zener du côté régulateur (134) est connecté au premier côté (GND) de l'unité de tension de signal (102), dans lequel une anode de la diode zener du côté régulateur est connecté à un émetteur du second transistor (130).
